(19) Europäisches Patentamt
European Patent Office
Office européen des brevets

(11) **EP 2 653 903 A1**

(12) **EUROPEAN PATENT APPLICATION**

(43) Date of publication:
**23.10.2013 Bulletin 2013/43**

(51) Int Cl.:
***G02B 21/34*** (2006.01)     ***G02B 21/00*** (2006.01)
***G01N 21/64*** (2006.01)

(21) Application number: **12165040.2**

(22) Date of filing: **20.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FOM Institute for Atomic and Molecular Physics**
**1098 XG Amsterdam (NL)**

(72) Inventors:
• **Johnson, Patrick Michael**
  **1098 XG Amsterdam (NL)**
• **Gjonaj, Bergin**
  **1098 XG Amsterdam (NL)**

(74) Representative: **De Vries & Metman**
**Overschiestraat 180**
**1062 XK Amsterdam (NL)**

(54) **Plasmonic microscopy**

(57)     A scanning plasmonic microscope apparatus is described comprising a sample holder comprising a dielectric substrate, preferably a transparent dielectric substrate, covered with at least one metallic thin-film comprising plasmon-generating nanostructures adjacently arranged to at least one scanning area, said scanning area comprising a continuous, flat metallic surface for supporting one or more samples, preferably a biological sample; a spatial light modulator in optical alignment with said sample holder, said spatial light modulator comprising pixels for illuminating at least part of said nanostructures with light of a predetermined phase; a storage medium comprising target coordinates associated with target points in said at least one scanning area; and, phase information for controlling said pixels so that surface plasmon waves emitted by pixel-illuminated nanostructures are substantially in phase (focussed) in at least one of said target points in said at least one scanning area; and, an image sensor configured to image photons, which are scattered away from said scanning area when surface plasmons in said target point interact with at least part of said one or more samples; and, a scanner controller for controlling pixels in said spatial light modulator, said pixels illuminating at least part of said nanostructures on the basis of said phase information.

**FIG. 1**

EP 2 653 903 A1

**Description**

Field of the invention

The invention relates to plasmonic microscopy, and, in particular, though not exclusively, to a scanning plasmonic microscope apparatus, a sample holder for use in such apparatus, a computer-implemented method for controlling such apparatus, a data structure for use with such apparatus and a computer program product using such method.

Background of the invention

Optical microscopy provides information of specimen via their interaction with light. The smallest features resolved with standard microscopy are at the best in the range of the optical wavelength $\lambda$ and subject to the diffraction limit of the optics. To reveal the underlying information inside $\lambda^3$ volumes various new techniques have been proposed. For example, in near-field microscopy super resolution maybe achieved by nano-aperture detection.

In fluorescence microscopy sequential activation and localization of photo-switchable fluorophores may be used to create high-resolution images. However, fluorophores that are bound to the specimen surface and those in the surrounding medium exist in an equilibrium state. When these molecules are excited and detected with a conventional fluorescence microscope, the resulting fluorescence from those fluorophores bound to the surface is often overwhelmed by the background fluorescence due to the much larger population of non-bound molecules.

In order to solve this problem, so-called total internal reflection microscopy (TIRFM) may be used to electively illuminate and excite fluorophores in a restricted region of the specimen immediately adjacent to the glass-water interface. The excitation is realized by evanescent waves, which are generated only when the incident light is totally internally reflected at the glass-water interface. The evanescent electromagnetic field decays exponentially from the interface, and thus penetrates to a depth of only approximately 100 nm into the sample medium. This way, TIRFM enables a selective visualization of surface regions.

Plasmonic microscopy is another super resolution microscopy technique, which uses the excitation of evanescent waves on metallic nanostructures. Surface plasmon polaritons (SPP) are surface waves bound to metal-dielectric interfaces. The major advantage of SPPs is that, for a fixed light frequency, the wavelength of these evanescent waves is much shorter than that of free propagating photons in the same dielectric. Thus, plasmonic microscopy not only equals the evanescent out-of-plane resolution, which is typical for TIRFM, but also offers large potential for in-plane super resolution.

The main barrier for plasmonic microscopy is the impossibility to use plasmon optics for detection: the read out is always optical and thus diffraction limited. Independently of the SPP wavelength, wide field plasmonic excitation cannot improve resolution, which is determined only by the detection optics. For example, the article by Watanabe et. al. "Scanning and non-scanning surface plasmon microscopy to observe cell adhesion sites" Biomed. Optics Express, February 2012 1, 3(2), p. 354-359, describes a plasmonic microscopy system combining lens-imaging-type surface plasmon microscopy (LISPM) and scanning localized surface plasmon microscopy (SLSPM) wherein SLSPM allows imaging of sites of sub-micron size. In this paper a slight improvement in the out-of-plane resolution was shown when compared to those obtained by TIRFM. Further, in order to achieve scanning a complex and expensive optical system in combination with a piezoelectric scanning stage is required.

Super resolution may be achievable provided that plasmons optics can create an in-plane confined excitation in a scannable way. In-plane confinement of SPPs was reported by Feedback can be used to create an in-plane confine plasmon excitation with some flexibility. Gjonaj et. al. in their article "Active spatial control of plasmonic fields", Nature photonics, Vol. 5, June 2011, p. 360-363. Experimental proof was presented that SPPs may be spatially controlled and focussed using a phase optimization algorithm. In this approach, the sample is considered as a black box with a large number of input and output waves. A control algorithm optimizes the input (incident wave front) using feedback until the desired output (focusing at a target spot) is achieved, i.e. maximum intensity at the target.

However using feedback is problematic for applications such as imaging. One problem relates to the fact that the feedback algorithm is relatively slow and complex so that high scanning speeds are not possible. Further, the optimization is based on measuring the photon intensity of from a nano-hole in array of nano-holes in a feedback loop. A nano-array however is not a suitable sample holder for imaging e.g. biomedical samples as photons scattered by the nano-holes will interfere with photons scattered by the sample thereby negatively influencing the resolution of the system. Further, the feedback approach limits resolution and field of view.

Hence, there is a need in the art for systems and methods, which enable SPP wavelength- limited plasmon lenses with in- plane super- resolution and scanning capability. In particular, there is a need in the art for high- speed scanning plasmonic microscopy systems combining nano- scale imaging resolution and ease of operation for use in routine biomedical imaging.

Summary of the invention

It is an objective of the invention to reduce or eliminate at least one of the drawbacks known in the prior art. In a first aspect the invention may relate to a scanning plasmonic microscope apparatus wherein said apparatus may comprise: a sample holder comprising a dielectric substrate, preferably a transparent dielectric substrate, covered with at least one metallic thin-film comprising plasmon-generating nanostructures adjacently arranged to at least one scanning area, said scanning area comprising a continuous, flat metallic surface for supporting one or more samples, preferably a biological sample; a spatial light modulator in optical alignment with said sample holder, said spatial light modulator comprising pixels for illuminating at least part of said nanostructures with light of a predetermined phase; a storage medium for storing target coordinates associated with target points in said at least one scanning area; and, phase information for controlling said pixels so that surface plasmon waves emitted by pixel-illuminated nanostructures are substantially in phase (focussed) in at least one of said target points in said at least one scanning area; and, a scanner controller for controlling pixels in said spatial light modulator, said pixels illuminating at least part of said nanostructures on the basis of said stored phase information. In an embodiment, said apparatus may further comprise an image sensor configured to image photons, which are scattered away from said scanning area when surface plasmons in said target point interact with at least part of said one or more samples.

In contrast with known TIR microscopes, the nanostructured sample holder allows a simple and very cost effective way of achieving surface microscopy for biological applications beyond the optical diffraction limit. The imaging resolution is determined by the SPP wavelength supported by the metallic substrate holder. The resolution may be further improved focussing plasmon waves emitted from different directions onto a target point. The sample holder in combination with the spatial light modulator, a laser source and the software for controlling the scanning process provides a very simple and cheap kit allowing to "upgrade" a conventional light microscope to a scanning plasmonic microscopy with in-plane resolutions down to 50 nm.

In an embodiment said storage medium may further comprise amplitude information for selecting pixels, which are used to control the illumination of said at least part of said nanostructures. The pixels in the SLM may be configured to illuminate

In another embodiment said phase information may be determined on the basis of the relative distance between a plasmon-generating nanostructure and a target point, preferably said phase information being determined using the formula:

$$\widetilde{\phi}(\mathbf{r}_\mathrm{n}, \mathbf{r}_0) = -\arg\left[g(\mathbf{r}_0, \mathbf{r}_\mathrm{n})\right] = -k_S r_{0,n} = -\frac{2\pi}{\lambda_S} r_{0,n}.$$

wherein $r_{0,n}$ is the relative distance between a source coordinate $r_\mathrm{n}$ associated with a plasmon-generating nanostructure and a target coordinate $r_0$ associated with a target point and wherein $\lambda_S$ is the SPP wavelength. In yet another embodiment said target points may form a grid of target points in said scanning area. In an embodiment, the spacing between said target points being between 10 nm and 400 nm, preferably between 20 and 200 nm. Hence, the invention allows determination of the phase shape of a plasmonic lens without complex feedback optimization algorithms. Such deterministic approach allows for fast scanning of a scanning area using scanning steps as small as 10 nanometers.

In an embodiment said scanner controller may be configured to illuminate at least part of said nanostructures on the basis of said phase information such that said surface plasmon waves emitted by pixel-illuminated nanostructures are sequentially focussed in at least part of said grid of target points. Hence, scanning may be achieved by scanning the scanning area with focussed pleasmon waves.

In an embodiment said nanostructured sample holder may comprise a plurality of scanning areas wherein each or at least part of said plurality of scanning areas is associated with a plurality of plasmon-generating nanostructures.

In an embodiment said target coordinates may be associated with target points in two or more of said scanning areas; said phase information being used for controlling pixels so that surface plasmon waves emitted by pixel-illuminated nanostructures are substantially in phase (focussed) in said target points in said scanning areas; and, wherein said scanner controller may be configured to control said spatial light modulator, such at least part of said nanostructures associated with two or more of said scanning areas are illuminated on the basis of said phase information. In these embodiments, parallel scanning and imaging of multiple scanning areas may be achieved. In this way scanning at video rate over wide field of views may be achievable without any resolution loss.

In another aspect, the invention may relate to a sample holder for use in a scanning plasmonic microscope apparatus as described wherein said sample holder may comprise: a dielectric substrate, preferably a transparent dielectric substrate, covered with at least one metallic thin-film comprising plasmon-generating nanostructures adjacently arranged to one or more scanning areas, wherein a scanning area may comprise a continuous, flat metallic surface for supporting one or more samples, preferably a biological sample; and, wherein said plasmon-generating nanostructures may comprise one or more nano-holes, nano-protrusions, nano-wires and/or nano-trenches. In an embodiment, said metallic film may comprise a metal, preferably gold, silver or aluminium, a semiconductor or graphene.

In an embodiment said metallic thin-film may have a thickness between 20 and 100 nm. In another embodiment said metallic thin-film may be covered with a dielectric thin-film layer. In yet another embodiment said dielectric thin-film layer may have of thickness between 20 and 60 nm. Adding an additional thin dielectric layer on top of the metallic layer may decrease the SPP wavelength (and thus increase the resolution) with a factor of about 3 when compared with a single metallic thin-film.

In an embodiment, said dielectric thin-film layer may be covered with a further metallic thin-film. In another embodiment, said further metallic thin-film layer having a thickness between 20 and 40 nm. A metal-dielectric-metal thin-film multi-layer structure may provide SPP wavelengths, which are a factor 6-10 smaller than a single metallic layer

In a further aspect, the invention may relate to the use of a sample holder, as described above, in scanning plasmonic microscope apparatus, preferably in a scanning plasmonic microscope as described above.

In a further aspect, the invention may relate to a computer-implemented method for generating phase information associated with a sample holder comprising at least one metallic thin-film comprising plasmon-generating nanostructures adjacently arranged to at least one scanning area, wherein said method may comprise: identifying a number of plasmon-generating nanostructures on said sample holder; determining a source coordinate $r_n$ associated with said plasmon-generating nanostructures; determining a grid of target points, each of said target points being associated with a target point coordinate $r_0$; calculating phase information associated with a target point in said grid of target points, said phase information allowing the control of surface plasmon waves emitted from said plasmon-generating nanostructures into said scanning area so that said surface plasmon waves are substantially in phase (focussed) in at least one of said target points; and, storing said phase information for at least part of said plasmon-generating nanostructures and at least part of said target points on a storage medium.

In an embodiment, said phase information may be determined using the formula:

$$\widetilde{\phi}(\mathbf{r}_{\mathrm{n}}, \mathbf{r}_0) = -\arg\left[g(\mathbf{r}_0, \mathbf{r}_{\mathrm{n}})\right] = -k_S r_{0,n} = -\frac{2\pi}{\lambda_S} r_{0,n}.$$

wherein $r_{0,n}$ is the relative distance between a source coordinate $r_n$ associated with a plasmon-generating nanostructure and a target coordinate $r_0$ associated with a target point and wherein $\lambda_S$ is the SPP wavelength. The invention provides a very flexible way of designing a nanostructured sample holder and generation of phase information which is needed to use the sample holder as a plasmonic microscope. On the basis of the geometry of the  nanostructured plasmon sources and the scanning area, phases can be easily calculated using the relative distance between the sources and target points in the scanning area. Hence, phase information for all target points in the scanning area may be calculated and stored as a file, e.g. a phase map file, in a memory.

In another aspect, the invention may relate to a computer-implemented method for controlling a scanning plasmonic microscope apparatus, preferably scanning plasmonic microscope apparatus as described above, comprising a sample holder comprising at least one metallic thin-film comprising plasmon-generating nanostructures adjacently arranged to at least one scanning area, wherein said method may comprise: determining a predetermined number of plasmon-generating nanostructures on said nanostructured sample holder; determining a predetermined grid of target points in said scanning area, said target points being associated with target coordinates; retrieving phase information for said plasmon generating nanostructures, said phase information being associated with a target point in said grid of target points; focussing surface plasmon waves in said target point by controlling pixels in a spatial light modulator on the basis of said phase information, preferably each of said pixels being controlled to illuminate at least part of a predetermined plasmon-generating nanostructure with light, preferably laser light, of a predetermined phase; generating an image sample associated with said target point; and, repeating said focussing and said generation of image samples for at least part of said target points of said grid of target points.

In one embodiment, plasmon-generating nanostructures arranged on opposite side of the scanning area may be used to focus plasmon waves in a target point. When compared with a plasmon-generating nanostructures on one side of the scanning area, this embodiment allows focussing on a sample from two opposite sides, hereby provides improving the numerical aperture with a factor of 2. Hence, in this embodiment the  resolution is about $\lambda_S/2$. In a further embodiment, plasmon-generating nanostructures arranged on all (four) sides a scanning area may be used to focus plasmon waves in a target point, thereby providing a (maximum) improvement in numerical aperture with a factor of 4 resulting in a resolution of about $\lambda_S/4$.

In a further embodiment, the invention may relate to a data structure for use with a scanning plasmonic microscope apparatus as described above, wherein said data structure may comprise target coordinates associated with target points in at least one scanning area of a nanostructured sample holder comprising plasmon-generating nanostructures; and, phase information for controlling pixels in a spatial light modulator with is in optical alignment with said sample holder, each of said pixels being used for illuminating at least part of a predetermined plasmon-generating nanostructure with light, preferably laser light, of a predetermined phase.

The phase information for controlling the pixels in the SLM is calculated analytically on the basis of the design parameters of the nanostructured sample holder. Then, to create the calculated phase pattern, a file comprising the phase information is loaded from the compute. The phase information comprises phase values for each pixel that is used to illuminate a plasmon-generating nanostructure on the sample holder. The phase information is used by the scanner controller and translated into voltages for the pixels in the SLM.

The invention may also relate to a computer program product, implemented on computer-readable non-transitory storage medium, the computer program product configured for, when run on a computer, executing any of the method steps as described above.

The invention will be further illustrated with reference to the attached drawings, which schematically will show embodiments according to the invention. It will be understood that the invention is not in any way restricted to these specific embodiments.

<u>Brief description of the drawings</u>

**Fig. 1** depicts at least part of a scanning plasmonic microscopy system according an embodiment of the invention.
**Fig. 2A-2D** depict a schematic of at least part of a scanning plasmonic microscopy system and methods for use in such system according an embodiment of the invention.
**Fig. 3** depicts different modes of operating a scanning plasmonic microscopy system according to an embodiment of the invention.
**Fig. 4** depicts schematics of different geometries for the scanning area and the plasmon-generating nanostructures structures according to various embodiment of the invention.
**Fig. 5** depicts cross-sections of metallic thin-film layers for using in a nanostructured sample holder according various embodiments of the invention.
**Fig. 6A** and **6B** depict nanostructured sample holders according to various embodiments of the invention.
**Fig. 7A** and **7B** depict SEM images of two areas of a nanostructured sample holder according an embodiment of the invention.
**Fig. 8A-C** illustrate the process of determining the location of the sources associated with a scanning area.
**Fig. 9A-9C** depict images obtained by a scanning plasmon microscope according to one embodiment of the invention, by illumination with white light and by using a SEM respectively.
**Fig. 10** illustrates the evaluation of the SPP focus size.
**Fig. 11A-11C** depict images of a scanned arena using a plasmon scanning microscope according to one embodiment of the invention.
**Fig. 12A** and **12B** depict calculated SPP distributions in an arena used in the plasmon scanning experiments.
**Fig. 13A** and **13B** depict a conventional light microscope and a conventional light microscope implemented with a scanning plasmon microscopy kit according to an embodiment of the invention.

<u>Detailed description</u>

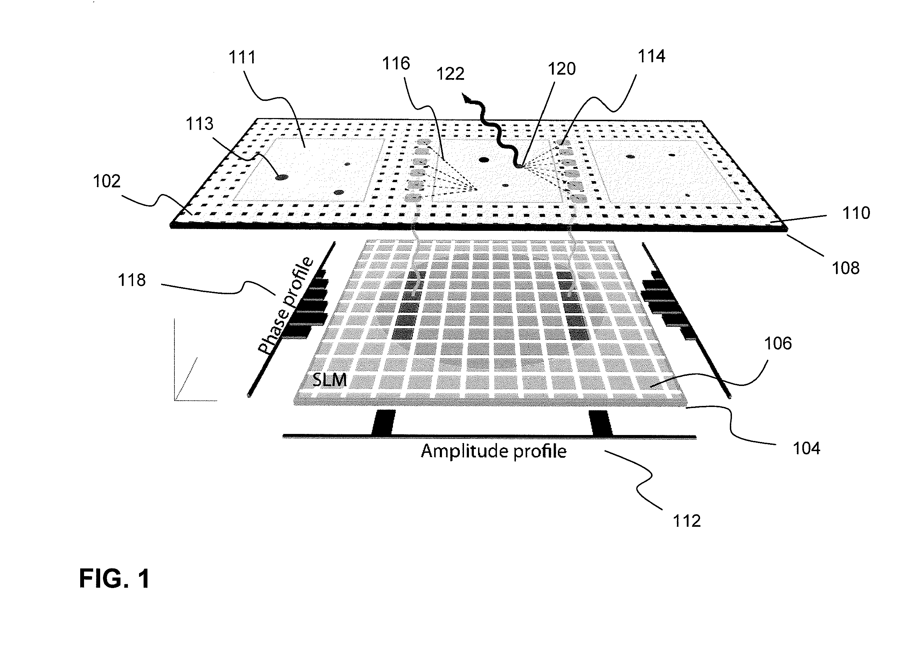

**Fig. 1** depicts a schematic of at least part of a plasmonic microscopy system according an embodiment of the invention. The system may comprise a nanostructured sample holder **102,** which sits in an image plane of a spatial light modulator (SLM) **104.** The SLM may comprise individually addressable unit cells (pixels) **106.** A SLM controller (not shown) may control the transmission and/or polarisation properties of a pixel. The SLM may be illuminated with a laser beam of a predetermined wavelength (the translucent red circle) so that the laser light may be controllably imaged by an optical lens system (not shown) onto the backside of the nanostructured sample holder. A SLM controller (not shown) may control the transmissive properties of the pixels.

In one embodiment, the SLM may be based on liquid crystals pixels wherein each pixel is addressable with a voltage. Depending on this voltage, the refractive index changes thus introducing a voltage-tuneable delay to the optical path. Such LCD-based SLMs are very cheap. In another embodiment, the SLM may be based on MEMS technology comprising an array of deformable mirrors. In such MEMS-based SLM each pixel comprises a piezoelectric-controlled mirror. When applying a voltage to the piezoelectric, the mirror moved over a desired amount, thus introducing an optical path delay. Such MEMS-based SLMs allow very fast control of optical path delays, and hence, the phase of the light which is imaged onto the nanostructured sample holder.

The sample holder may comprise a translucent (e.g. glass) substrate **108** covered with at least one nanostructured metallic film **110.** The metallic film may comprise one or more continuously and flat areas **111,** which are free of any nanostructures (hereafter also referred to as "arena's" or "scanning areas") and which are surrounded by the plasmon-generating nanostructures, e.g. an arrangement or an array of nano-holes or nano-protrusions. Scatters **113** associated with a sample, e.g. a biological sample, may be deposited onto the arena for imaging. The SLM controller may be configured to control the SLM pixels so that coherent light, e.g. laser light, is controllably imaged onto one or more the plasmon-generating nanostructures adjacent to an arena. By controlling the transmissive properties of a pixel, the phase and amplitude of the laser light imaged on a nano-structure may be controlled.

In the example of **Fig. 1,** the SML controller has set two linear pixel arrays of the SLM to have nonzero amplitude (as indicated by the amplitude profile **112).** It will be apparent for a skilled person that other pixel configurations are possible. The laser light transmitted through these SLM pixels is imaged onto one or more plasmon-generating nano-structures positioned adjacent to the arena. The laser-illuminated nano-structure **114** may generate coherent surface plasmon polaritions (SPPs) **116** that propagate into the arena. By controlling the phase and amplitude of the laser light, the phase of the SPP can be accurately controlled.

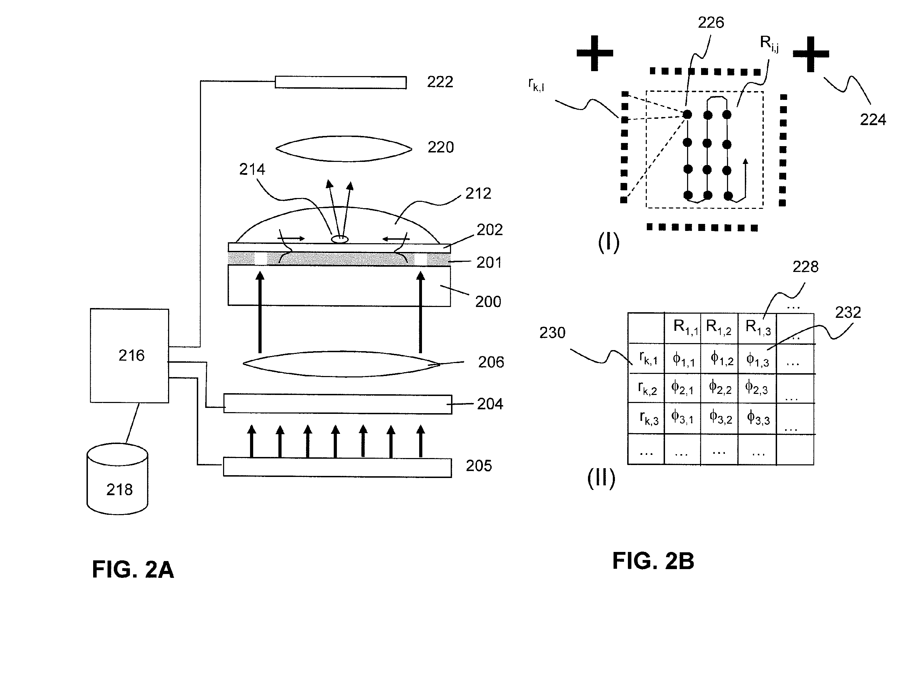

As will be described hereunder in more detail, the simple geometry of the nanostructured sample holder and the flatness of the arena's allows accurate calculation of a phase profile **118** for the pixels in the linear pixel array so that the SPPs emitted by the linear array of illuminated nanostructures are accurately focused in a predetermined SSP focus point **120** in the arena. Hence, phase profiles may be determined for any point in the arena allowing focussing of SPPs in any position in the arena. Photons **122** are scattered away from the arena only when the SPP focal point hits a scatterer associated with a sample. A scatterer may be regarded as a fluctuation in the index of refraction at the surface. The collection of scattered light from the sample is similar in principle to dark field microscopy. These photons may be imaged by an CCD (see **Fig. 2A** for more details) so that an image may be built up of the scattering regions in the arena.

Hence, the SLM and an optical lens system is configured to image predetermined areas of the nanostructured sample holder wherein each unit cell (pixel) of the SLM may be associated with a corresponding area on the sample. Further, the pixels imaged onto the nano- structures locally excite SPPs, i.e. surface plasmon waves, which propagate along the metal- air interface of the arena area. Photons will be scattered out of the plane when encountering refractive index fluctuations, for example when encountering a cell and its varied components. During controlled generation of the SSPs the surface of the sample is imaged onto the sensor of a CCD camera revealing among other things also these ejected photons.

To achieve SPP focusing at a chosen target location the arena, the SLM is configured to image laser light onto a nanostructured sample holder as depicted in **Fig. 1.** Two parallel linear arrays of controllable SLM pixels are imaged on to two linear arrays of nanostructures, which are arranged adjacent to an arena so that SPP waves are launched into the arena. Hence, the illuminated nano-structures act as SPP sources emitting SPPs into the arena (or scanning area). Here, the scanning area may be a flat thin-film structure comprising at least one continuous metallic film. The metallic thin-film structure of the scanning arena may provide various advantageous properties.

One advantage relates to the fact that SPPs inside the continuous metallic scanning arena obey free space propagation in two dimensions. As will be shown hereunder in more detail, the sample holder design is such that the SPP waves emitted in the scanning area may be analytically described by a predetermined Hankel function. By selecting a predetermined configuration of the scanning area and the nano-structures, the phase profile (i.e. the phase settings) of an array of SLM pixels may be determined deterministically using the relative distances between a target point in the scanning area and the plasmon-generating nanostructures.

Another advantage is related to the fact that it allows imaging of one or more scatters, e.g. a biological sample, which is in contact with the scanning arena. This is because SPP waves cannot couple out from a continuous metallic layer. Only when a scatterer is encountered, photons may be ejected out of the metallic layer and imaged. Yet another advantage is that the SLM may be configured to expose multiple arrays of plasmon-generating nanostructures, wherein each array is associated with a scanning area. Hence, the invention is particularly suitable for parallel scanning of multiple scanning areas without any increase in the acquisition time.

**Fig. 2A** and **2B** depict a schematic of at least part of a scanning plasmonic microscopy system according an embodiment of the invention. In particular, **Fig. 2A** depicts a schematic of a scanning plasmonic microscopy system comprising a nanostructured sample holder comprising a transparent substrate (e.g. glass or plastic) **200** and a nanostructured metallic thin-film layer **201.** In some embodiments, the sample holder may comprise further a thin dielectric layer, e.g. $SiO_2$ or $Si_2N_3$ **202.** The system may further comprise a pixelated SLM **204,** which is illuminated with a laser source **205** and an optical lens system **206.** The SLM and the optical lens system is optically aligned with the nanostructured sample holder. Alignment may be achieved by using alignment markers on the sample holder (as is schematically depicted in **Fig. 2B** (I) **224)** or any other suitable way alignment. The SLM may be used to controllably direct laser light via the optical lens system onto back-side of the nanostructured sample holder. In particular, the SLM may be used to direct laser light onto a predetermined part of the plasmon-generating nano-structures **208.** As already described with reference to **Fig. 1,** the laser-illuminated nano-structures generate SPP waves, which travel via the metal-dielectric interface of the sample holder into the scanning area. The scanning area may comprise a biological sample comprising e.g. an aqueous medium **212** comprising one or more cells **214.**

The SLM is controlled by a scanner controller **216,** which is configured to control the pixels in the SLM such that the SPP waves emitted by the surface plasmon sources into the scanning area are focussed at particular target point. The scanner controller thereafter moves the target point in a predetermined direction such the whole scanning area, or at least a part of the scanning area, is exposed by the focussed  SPP waves. Control of the focussing point of the SPP waves emitted by the surface plasmon sources is achieved by controlling the phase of the laser light which is imaged onto a surface plasmon-generating nanostructure using the SLM. As will be described hereunder, the geometry of the scanning area and the surface plasmon-generating nanostructures adjacent to the scanning area is such that the phases for focussing SPP waves can be determined analytically.

The calculation of the phase $\tilde{\phi}$ ($\mathbf{r}_n$, $\mathbf{r}_0$) for focusing an SPP wave, generated by a plasmon source located at source position (or source coordinates) $r_n = (x_n, y_n)$, in an predetermined target point associated with target coordinates $r_0 = (x_0, y_0)$ in a scanning area (as e.g. shown in **Fig. 2B** (I) ) is based on a Green's function g ($r_0$, $r_n$) connecting the surface plasmon source to the target location within the scanning area. The Green's function is given by the Hankel function $H_0^{(1)}$ (Kr) with K the SPP momentum:

$$g(\mathbf{r}_0, \mathbf{r}_\mathrm{n}) = H_0^{(1)}(K_S r_{0,n}) \approx \sqrt{\frac{2}{\pi r_{0,n}}} \exp\left[i(K_S r_{0,n} - \pi/4)\right],$$

$$r_{0,n} \equiv |\mathbf{r}_0 - \mathbf{r}_n| = \sqrt{(x_0 - x_\mathrm{n})^2 + (y_0 - y_\mathrm{n})^2}.$$

The Green's function is fully determined once the source-target distance $r_{0,n}$ is known. For focusing, the SPP waves from different sources have to be in phase with each other at the target location. In order to achieve this alignment, the loaded phase (via the SLM) of the plasmon sources have to compensate the phase delay introduced by the relative Green's function:

$$\widetilde{\phi}(\mathbf{r}_\mathrm{n}, \mathbf{r}_0) = -\arg\left[g(\mathbf{r}_0, \mathbf{r}_\mathrm{n})\right] = -k_S r_{0,n} = -\frac{2\pi}{\lambda_S} r_{0,n}.$$

Here, the phase term- $\pi/4$, constant for all sources, is removed as part of a global phase offset (only phase differences are relevant) . On the basis of this equation phase settings can be determined for any number of plasmon sources and target points in the scanning area. The distance between two target points may define a scanning distance, which may be smaller than 50 nm.

**Fig. 2B** (I) schematically depicts the scanning of the SSP focus **226** over the scanning area. In order to realize such scanning, phase calculations are performed for a predetermined grid of target locations $\{R_{i,j}\}$ in the scanning area. For focussing the SPP waves in a predetermined target location e.g. $R_{1,1,}$, plasmon-generating nanostructures at source locations $\{r_{k,1}\}$ are associated with phase values, e.g. $\phi_{1,1}$, $\phi_{2,1}$, $\phi_{3,1}$,... (as shown in **Fig. 2B** (II)). For all or at least part of the target and source locations, phase information, i.e. phase setting for the SLM pixels, may be stored in a storage medium **218** or a memory connected to the scanning controller. The phase information may be used to configure pixels in the SLM so that when light is imaged onto the plasmon-generating nanostructures, the SPPs are focussed into a predetermined target point of the scanning area.

The above scheme provides a very flexible way of designing a nanostructured sample holder. On the basis of the geometry of the nanostructured plasmon sources and the scanning area, phases can be easily calculated using the relative distance between the sources and target points in the scanning area. Hence, phase information for all target points in the scanning area may be calculated and stored as a file, e.g. a phase map file, in a memory.

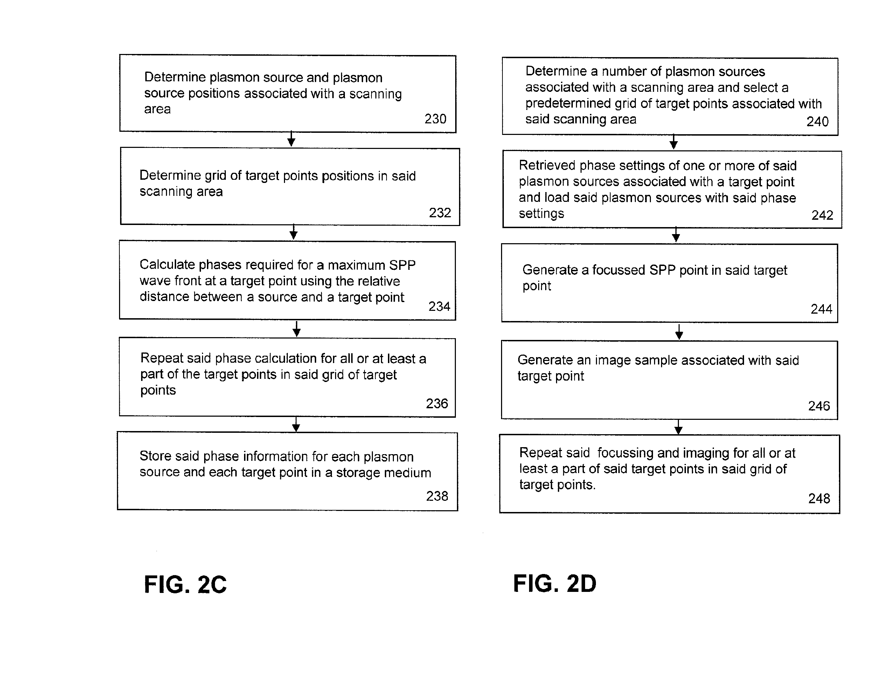

**Fig. 2C** schematically depicts the computer-implemented method for determining phase information, i.e. the phase settings for pixels, for focussing SPPs in target locations of a predetermined scanning area according to an embodiment of the invention. The method may start with a first step **230** wherein plasmon sources may be identified and plasmon source positions may be defined. Preferably, the plasmon-generating sources are immediately adjacent to the scanning area so that optimal focusing may be achieved. Then, in a second step **232** a grid of target points positions in said scanning area may be defined. Here, the distance between the target points may define the scan step distance. Thereafter, in a third step **234** a phase may be calculated for each source, which is required for generating a maximum SPP wave front at a target point. These phases may be calculated using the relative distance between a source and a target point as described above with reference to the Green's function. The phase calculations for all or at least part of the plasmon sources may be repeated for all or at least a part of the target points in said grid of target points (step **236)**. The phases for each plasmon source and the grid of target points may be stored in a storage medium for later use (step **238**).

When starting a scan of a scanning area, first phase settings associated with a predetermined first target location may be retrieved by the scanning controller from the storage medium. The scanner controller subsequently configures the SLM on the basis of the phase settings so that a predetermined number of plasmon-generating sources (e.g. a linear array of plasmon-generating nano-structures arrange at one side of the scanning area as depicted in **Fig. 2B** (I) and (II)) generate SPP waves, which focus into the desired target location. Thereafter, a new set of phase settings associated with a second target location may be retrieved from the storage medium and used to configure the plasmon-generating sources such that the SPP waves are focussed in the second target location. This process may be repeated until the whole, or at least part of the scanning area is scanned by the SPP focal point. In each cycle, the target location may be moved over a certain distance, which may be very small, e.g. 50 nm or less. The scanner controller may be configured to scan the focal point over the scanning area as for example depicted in **Fig. 2B** (II). When the SPP focal point "hits" a scatter, e.g. a cell, photons are emitted and are projected via an optical lens system **220** onto the imaging plane of an imaging sensor **222,** e.g. a CCD or active pixel sensor. The CCD may be connected to the SLM controller so that the imaging information may be processed and displayed to a user (not shown).

**Fig. 2D** schematically depicts the process of scanning part of a scanning area according to an embodiment of the invention. The process may start with selecting a number of plasmon sources associated with a scanning area (step **240)**. Further, predetermined grid of target point positions associated with said scanning area may be selected wherein the distance between neighboring scanning points determine a scanning step distance.

Thereafter, a target point is selected and phase settings of said target point for one or more of said plasmon sources are retrieved from a memory (step **244)** and the plasmon sources are loaded with said phase settings so that a focussed SPP point in said target point is generated. Further, an image sample associated with said target point is generated (step **246) .** If no scatterer is located at the location wherein the SPPs are focussed then no photons will detected. If a scatter is located at the location, then photons are detected and will be imaged by a camera. The phase retrieval step, focussing step and imaging step is repeated for all or at least a part of said target points in said grid of target points so that a high resolution image of the scanning area can be obtained (step **248) .**

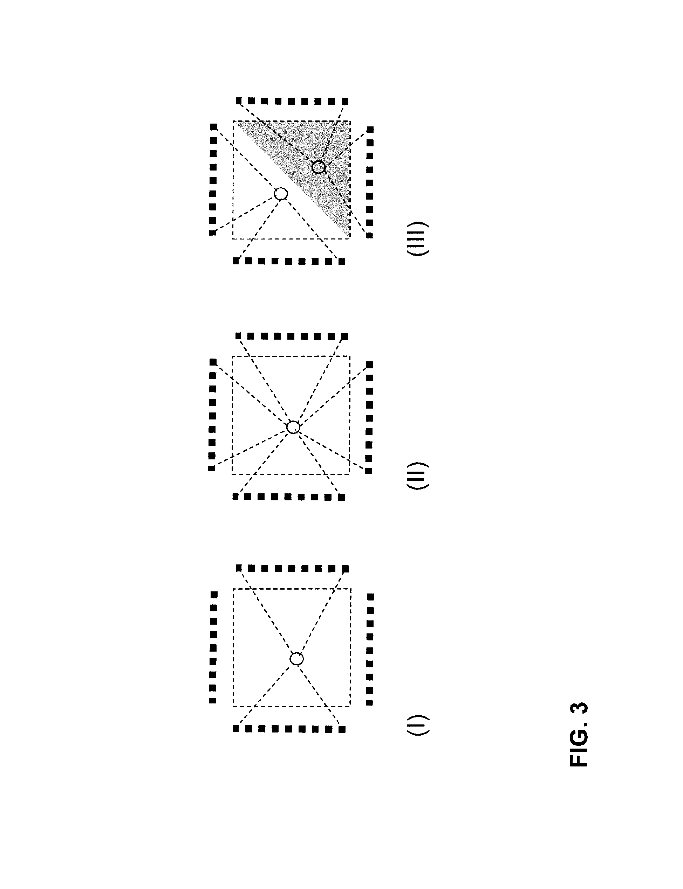

In an embodiment, all phase settings of the sources for each target point in the grid may be retrieved in one step so that only the focussing and imaging step needs to be repeated. In another embodiment, phase settings according to a predetermined scanning mode may be retrieved. The scanning plasmon microscope may be operated in different scanning modes as discussed hereunder in more detail with reference to **Fig.3)** For example, in one scanning mode two opposite linear arrays of plasmon generating sources may generate focussed SPPs, so phase settings associated with only these sources may be selectively retrieved from the phase settings stored in the memory.

Hence, from the above, it follows that the nanostructured sample holder may be used as a scanning plasmon microscope. Specifically, phase-structured illumination from a spatial light modulator (SLM) may be used, to create a configurable plasmonic lens. This lens may provide both focusing and scanning capabilities of SPPs below the optical diffraction limit. For example, a simple sample holder comprising a metallic thin-film layer on a glass substrate may provide an SPP wavelength at the gold-air interface from incident radiation of $\lambda_0 = 633$ nm of:

$$\lambda_S = \lambda_0 \mathrm{Re} \sqrt{\frac{\varepsilon_{\mathrm{m}} + \varepsilon_{\mathrm{d}}}{\varepsilon_{\mathrm{m}} \varepsilon_{\mathrm{d}}}},$$

wherein $\varepsilon_{\mathrm{m}}$ and $\varepsilon_{\mathrm{d}}$ are the dielectric constants of gold and air, respectively. Using tabulated bulk values for $\varepsilon_{\mathrm{m}}$ a value of $\lambda_S = 590$ nm. As will be discussed below in more detail, the SPP wavelength can be considerably reduced up to 50 nm using predetermined metallic-dielectric thin-film structures.

In contrast with known TIR microscopes, the metallic nanostructured microscope slide is a simple and very cost effective way of achieving surface microscopy for biological applications beyond the optical diffraction limit. It allows calculation of the phase shape of a plasmonic lens without complex feedback optimization algorithms. Such deterministic approach allows for fast scanning of a scanning area using scanning steps as small as few nanometers. The imaging resolution is determined by the SPP wavelength supported by the metallic substrate holder. The resolution may be further improved focussing plasmon waves emitted from different directions onto a target point. Furthermore, fast SLM devices allow parallel processing of multiple scanning areas. In this way scanning at video rate over wide field of views may be achievable without any resolution loss.

**Fig. 3** depicts different modes of operating a scanning plasmonic microscopy system according to an embodiment of the invention. **Fig. 3** (I) depicts a scanning mode wherein two linear arrays of surface plasmon sources arranged on opposite side of the scanning area are used in order to create a SPP focus point. When compared with a single linear array (as depicted in **Fig. 2B),** this mode of operation allows focussing on a sample from two opposite sides, hereby provides improving the numerical aperture with a factor of 2. Hence, in this embodiment the resolution is about $\lambda_S/2$. Similarly, **Fig. 3** (II) provides focussing of SPP waves from all sides, thereby providing a (maximum) improvement in numerical aperture with a factor of 4 resulting in a resolution of about $\lambda_S/4$. **Fig. 3** (III) provides yet another mode of operation wherein pairs of linear arrays adjacent to the scanning area are operated in parallel each scanning a particular area of the scanning area (denoted by the grey and white areas). Generalizing the principle of **Fig 3** (III), any number of focussed spots can be simultaneously illuminated and scanned by assigning mutually exclusive subsets of the available sources to the targets. In this way the balance between scan time, focus quality, and focus spot intensity can be optimized.

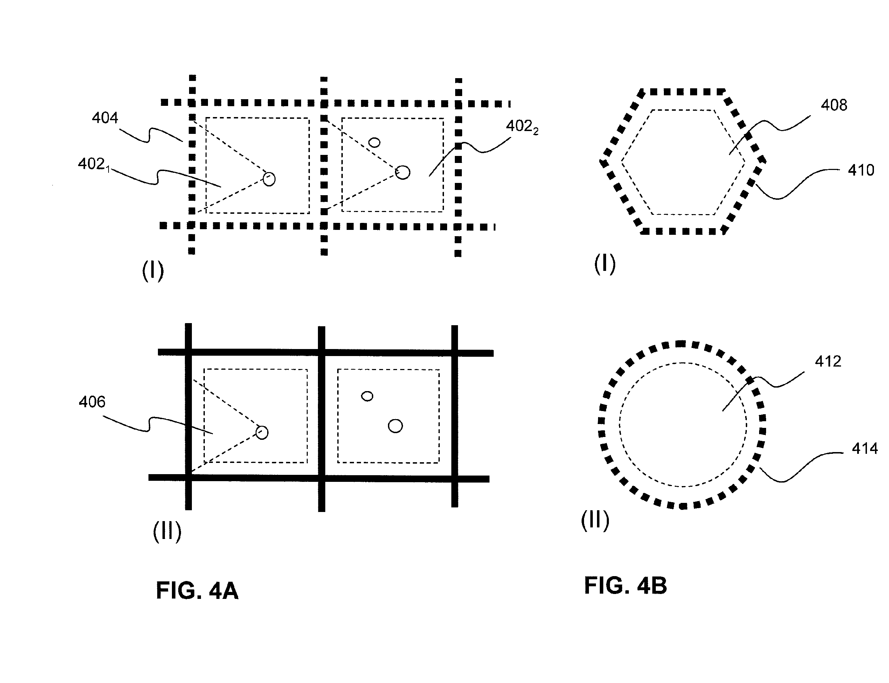

**Fig. 4** depicts schematics of different geometries for the scanning area and the nanostructures plasmon-generating structures. **Fig. 4** (I) depicts a layout wherein multiple scanning areas **402**$_{1,2}$ may be formed by a simple grid-structure of nano-structures **404,** e.g. linear arrays of nanostructures, e.g. nano-holes or nano-protrusions. The SLM may be configured to operate plasmon-generating sources for each scanning area in parallel. Hence, the design allows parallel scanning of multiple scanning areas. **Fig. 4** (II) depicts a layout wherein the plasmon-generating structures **406** are implemented as continuous trench of nano-size width in the metallic thin-film or, alternatively, a longitudinal wire over the metallic thin-film. Preferably, the width of the trench or wire may be between 50 nm and 600 nm, preferably between 100 nm and 400 nm. The SLM may be configured to image a laser bundle on a particular point of the nano-structured trench so that surface plasmons will be generated and emitted into the scanning area. **Fig. 4B** (I) and (II) depict various designs which are suitable for implementing a nanostructured sample holder, e.g. hexagon shaped scanning area **408** and associated nanostructured plasmon generating structures **410** or a circular shaped scanning area **412** and associated nanostructured plasmon generating structures **414.**

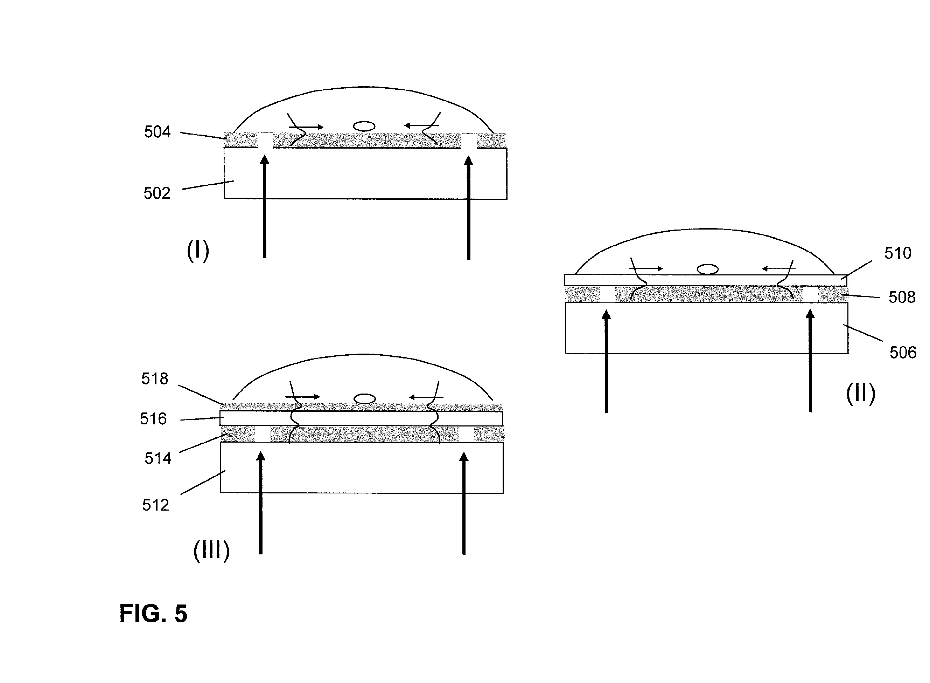

**Fig. 5** depicts cross-sections of metallic thin-film layers for using in a nanostructured sample holder according various embodiments of the invention.

**Fig. 5** (I) depicts a fairly simple structure of a transparent dielectric substrate **502** (e.g. glass or plastic) covered with a nanostructured metallic thin-film layer **504** having a thickness between 20 and 200 nm. The metal may be gold, silver, aluminium or any other suitable material for propagating SPPs (e.g. a thin highly doped semiconducting layer or a layer of graphene). This structure may provide a simple and cheap nanostructured sample holder providing a SPP wavelength for a gold-air interface of about $\lambda_S$ = 590 nm for 633 nm illumination.

**Fig. 5** (II) depicts a thin-film structure for a nanostructured sample holder according to another embodiment. This thin-film structure may comprise a glass substrate **506** and a metallic layer **508** similar to the ones described with reference to **Fig. 5** (I). The metallic thin-film layer however may in this case be covered with thin dielectric layer **510** of high dielectric constant, e.g. $SiO_2$ or $Si_2Ni_3$. The dielectric layer may have thickness between 20 and 60 nm. This particular thin-film structure may decrease the SPP wavelength with a factor of about 3 when compared with the metallic thin-film structure in **Fig. 5** (I).

**Fig. 5** (II) depicts a thin-film structure for a nanostructured sample holder according to yet another embodiment. In this embodiment, the metallic thin-film structure may comprise a glass substrate **512,** a metallic thin-film **514** and a dielectric layer **516** similar to the one described in **Fig. 5** (II). On top of the dielectric layer, a metallic thin-film **518** (e.g. gold, silver or aluminium) may be provided having a thickness between 20 and 40 nm. Such metal-dielectric thin-film multi-layer structures may provide SPP wavelengths, which are a factor 6-10 smaller than the single metallic layer in **Fig. 5** (I). Hence, when implementing a nanostructured sample holder on the basis of such metal-dielectric thin-film structure and operating it in a scanning mode as explained in **Fig. 3** (I) or (II), scanning resolutions up to 50 nm are possible, thereby providing a significant improvement when compared with microscopy systems in the prior art.

It is appreciated that a metallic thin-film structure is not limited to a structure comprising a thin-film metal layer (e.g. gold, silver, aluminium, etc.) but also compasses other thin-film layers with metallic properties which are suitable for generation and propagation of SSPs. For example, in one embodiment, the metallic layer may comprise one or more layers of grapheme. In another embodiment, a metallic thin-film structure may relate to a thin-film semiconductor structure comprising e.g. a high-mobility semiconducting layer.

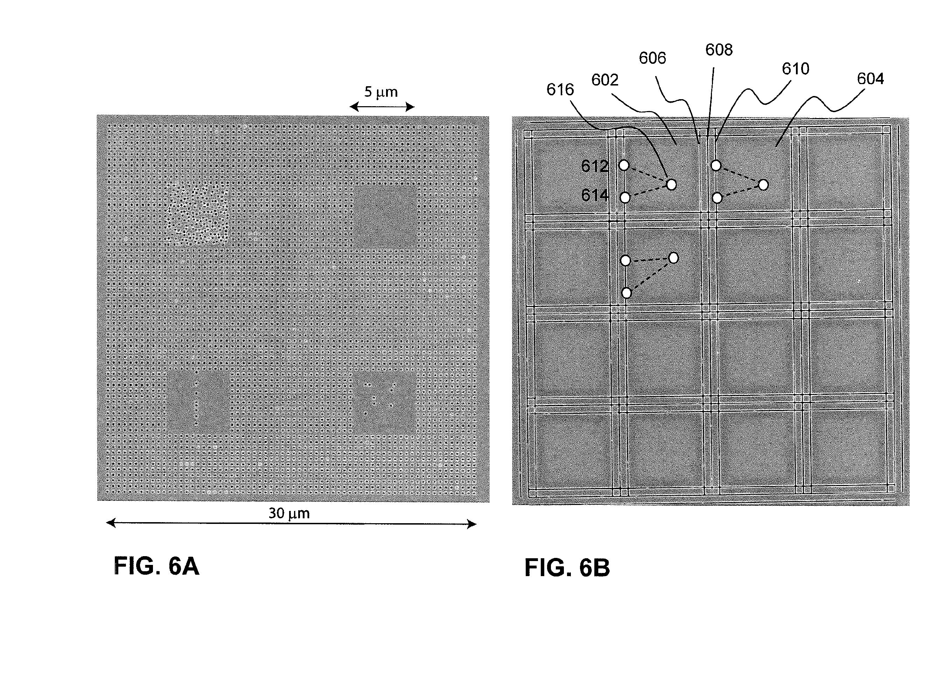

**Fig. 6A** depicts a nanostructured sample holder according to an embodiment of the invention. The sample holder may comprise a metallic thin-film layer, gold or silver, deposited on top of a translucent dielectric substrate, e.g.

a glass substrate. The metallic thin-film may have a thickness between 20 and 100 nm. The sample holder may comprise a plasmon generating nanostructure in the form of nano-structures, e.g. an array of nano-holes or nano-protrusions in the metallic thin-film layer. A scanning area may be defined adjacent to the metallic nano-hole array. The array may cover an area of a predetermined size depending on the particular application, e.g. a rectangular scanning area having width and length between 1000 and 2 μm. In **Fig. 6A** a 30 × 30 μm2 area of a sample holder is depicted. The period ($a_0$) of the nanostructures may be 200-600 nm (in this case 450 nm). An array of nano-structures, in this case square holes with sides of 177 nm were milled into the metallic thin-film using focused ion beam. The area includes four square arenas (5 μm × 5 μm), each different from the other and all surrounded by the nano-hole array, as shown in **Fig. 5.** Each arena is associated with a set of plasmon generating nanostructures, which are separately controllable via the SLM controller.

The nanostructured metallic thin-film layer may be produced using various known lithography techniques such as UV, X-ray, e-beam lithography and other related techniques. Alternatively, an adapted screen-print or inkjet printing technique may be used which allowing direct printing of nano-sized metal structures, e.g. nano-sized metallic dots, on a metallic thin-film layer (see e.g. Zhao et al., "Self-aligned inkjet printing of highly conducting gold electrodes with submicron resolution", Journal of Applied Physics 101, 064513, 2007). Another particular useful technique for large area application is the imprint lithography technique. This technique is described in US patent application US2008/0011934, which is hereby incorporated by reference into this application. Using this method an imprint template corresponding to the pattern of a predetermined nano-structured metallic thin-film structure is made. The structure of the imprint template thereafter transferred to a curable resin layer which is disposed over a (transparent) substrate. After curing the resin, the patterned resist layer is etched in order to etch nano-sized holes or trenches in the substrate. Deposition of a metal layer over the etched substrate finalizes the realization of the nano-structured metallic layer. The imprint technology is particular suitable for mass-production of cheap nanostructured sample holders.

**Fig. 6B** depicts a SEM picture of a nanostructured sample holder according to an embodiment of the invention. In this embodiment, multiple arenas (scanning area) **602,604** are defined on the basis of a number of parallel nano-sized trenches **606-610** having a width between 50 and 300 nm in a metallic thin-film layer. Here, the trenches directly adjacent to the arenas defines a SPP generating nanostructure which generates SPP when imaging a focussed laser beam on a particular part of the trench using an SLM in combination with an optical lens system as explained in detail with reference to **Fig. 2.** Each arena may be separately and simultaneously scanned by creating two or more SPP sources **612,614** at different locations of a nano-sized trenchs such that SPPs with a predetermined phase are emitted into the scanning area and such that these SPPs are focussed onto a predetermined focus point. As can be seen in the figure, arenas are separated by at least three trenches, two SPP generating trenches **606,610** separated by an isolation trench **608,** so that, when multiple arenas are scanned simultaneously, each arena is sufficiently isolated from the other. Hence, as is clear from **Fig. 6B,** sample holders, with massive parallel scanning capabilities may be easily fabricated and operated. Hence, one sample holder may allow scanning of multiple samples in parallel, which is a very advantageous feature of the present invention when compared other known techniques in the prior art.

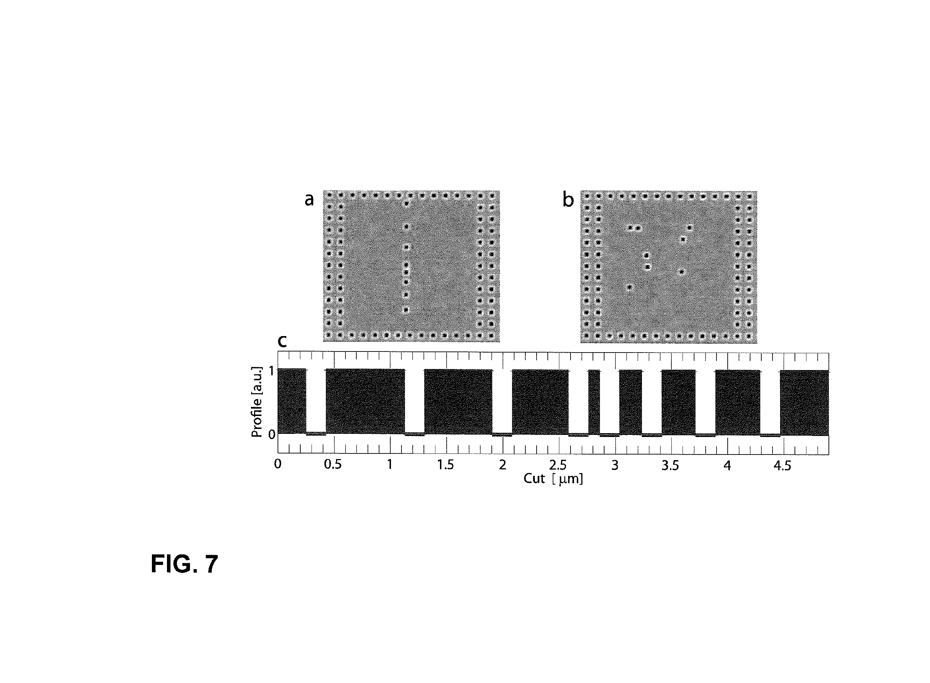

To test the microscope imaging ability, arenas were prepared with known structures. Each arena includes eight scatterers. SEM images of these arenas are shown in **Fig. 7A** and **7B.** The line arena **(Fig. 7A)** is bare gold with the exception of a line of holes. The profile of the line is shown in **Fig. 7C.** The spacing between the holes (defined as the metal stripe between them) is:

$$l_i = i \cdot 100 \ nm, \qquad \forall i \ \epsilon \ 1...7.$$

The spacing of the line arena was used to determine the resolution of our microscope: if the SPP focus is smaller than the metallic spacing, then no photons should be detected. The other arena **(Fig. 7B)** includes randomly positioned holes. This arena was used to test the scanning ability of the system.

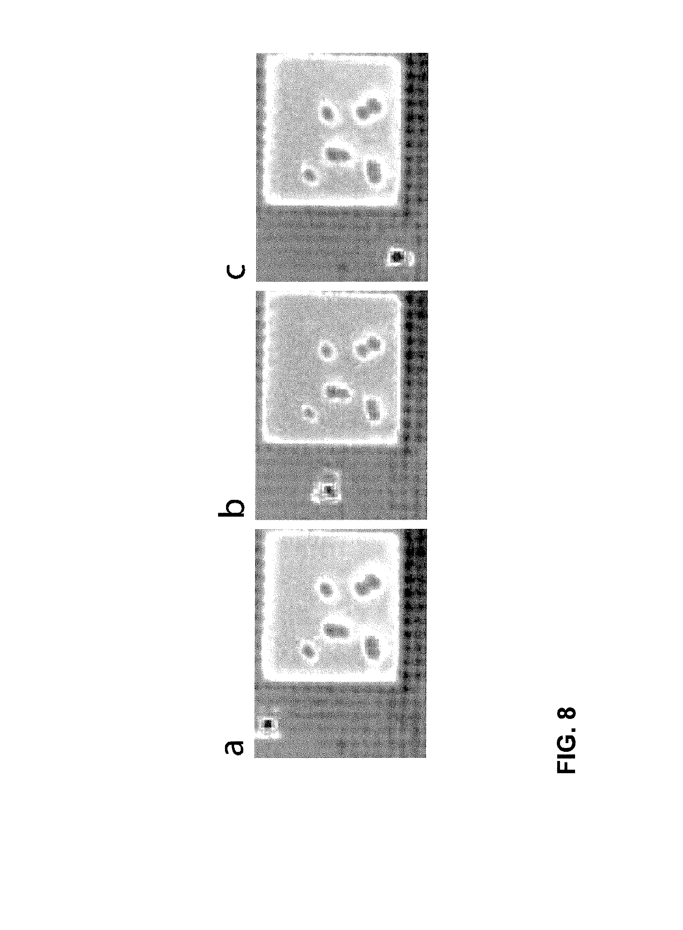

To calculate the required phases for focusing at a chosen target point, the distance between all sources and a target in the arena is determined. A two-dimensional coordinate system based on the CCD was introduced. In particular, the CCD pixels were used as coordinate units and, via the imaging system, each pixel corresponds to 64 nm on the sample. To determine the location of the sources, each of them was loaded individually (all other sources are off). This process is illustrated in **Fig. 8A-C** for three sources.

Once a single source (n) is loaded, its position is associated with the maxima of the CCD image. The source location $r_n$ is the maxima's position. This calibration process may be repeated for all sources, in this case 2 lines of 13 sources of the amplitude mask. After the calibration procedure, all sources are located at predetermined positions (measured in CCD coordinates or any suitable coordinate system):

$$\mathbf{r}_n = (x_n, y_n) \qquad \forall n \, \epsilon \, 1...26.$$

Thereafter, the required phases $\tilde{\phi}$ ($\mathbf{r}_n$, $\mathbf{r}_0$) for focusing at an arbitrary target point at position $r_0 = (x_0, y_0)$ are calculated. The Green's function connecting the source to the target, g ($r_0$, $r_n$), is given by the Hankel function $H_0^{(1)}$ (Kr) as described above with reference to **Fig. 2.** To implement the scanning of the SPP focus (required for imaging), the phase calculations are repeated for a 2D grid of target points in the scanning area. A typical grid of 100 $\times$ 100 target points, while covering the entire 5 im $\times$ 5 $\mu$m arena, provides a step- scan resolution of 50 nm. This series of simple (and fast) calculations allows separate focussing of SPPs in target points, which are up to few nanometres removed from each other. The calculated phases for each target point are then stored for later use.

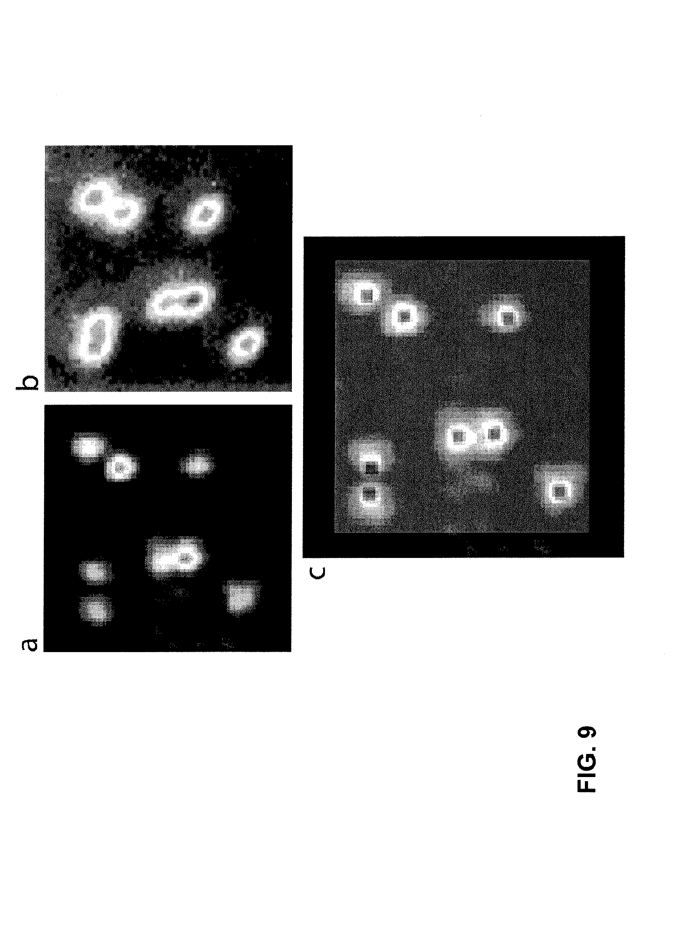

**Fig. 9A** depicts an image obtained by using a scanning plasmonic microscope according to one embodiment of the invention. During the scanning process, a single point of the image is acquired by focussing SPPs at the target point having coordinates ($x_0$,$y_0$) and reading out the CCD intensity of the pixel having the same coordinates (as explained with reference to **Fig. 2).** The full image is acquired by scanning the focus, first along the same focal line (focal plane in 3D) and then along next parallel line. The scan step is in this example 16 nm in both the x and y directions. For comparison, an image of the same structure obtained with white light illumination is shown in **Fig. 9B.** As can be seen, the plasmonic image acquired by the scanning plasmonic microscope is sharper and better resolved, even though this test uses the simplest and lowest resolution slide geometry described in Fig. 6 (I).

The overlap between the SEM image (transparent) of the structure and the plasmonic image is shown in **Fig. 9C:** the two images match correctly. There are few deviations (upper left coroner) when two very nearby scatterers screen each other from the plasmon sources (left and right of the image). Nevertheless, those scatterers are better resolved.

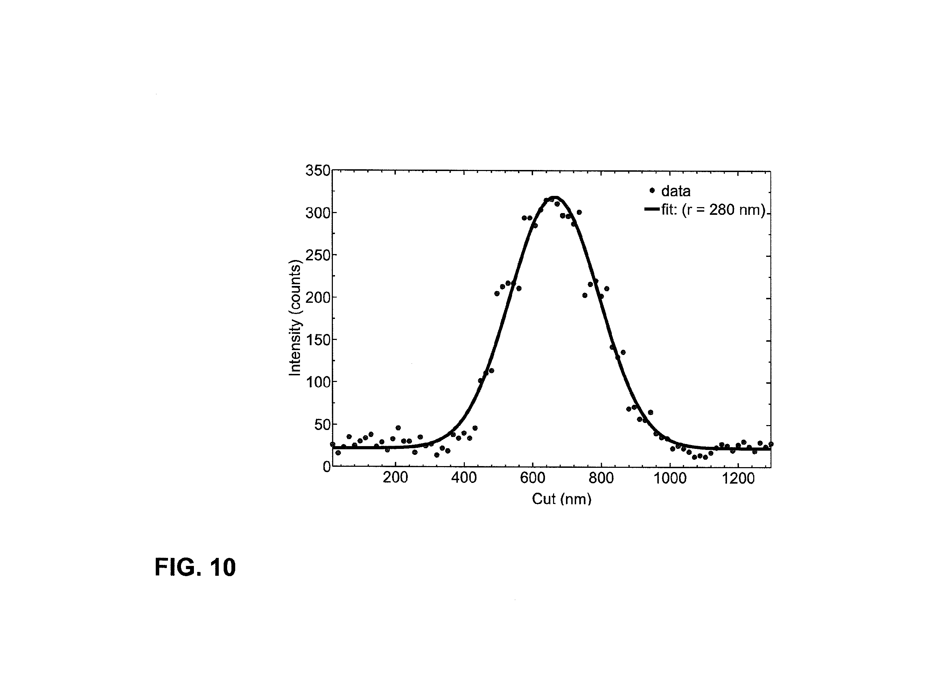

To estimate the focal size of the SPP spot, the cut of one of the most resolved holes was fitted. **Fig. 10** illustrates the evaluation of this cut. The data are obtained from **Fig. 9A** restricted to a single hole. This observation is the convolution of a Gaussian SPP focus with the hole profile (known by design). The data were fitted with a fixed hole profile to determine the SPP Gaussian spot (FWHM of 280 nm). The geometrical hole profile is known by the fabrication. The optical profile (the cut) is the geometrical profile of the hole convolved with the Gaussian SPP focus. The focus a FWHM (full width at half maximum) of 280 $\pm$ 30 nm, is in complete agreement with the SPP diffraction limit ($\lambda_S$ = 590 nm).

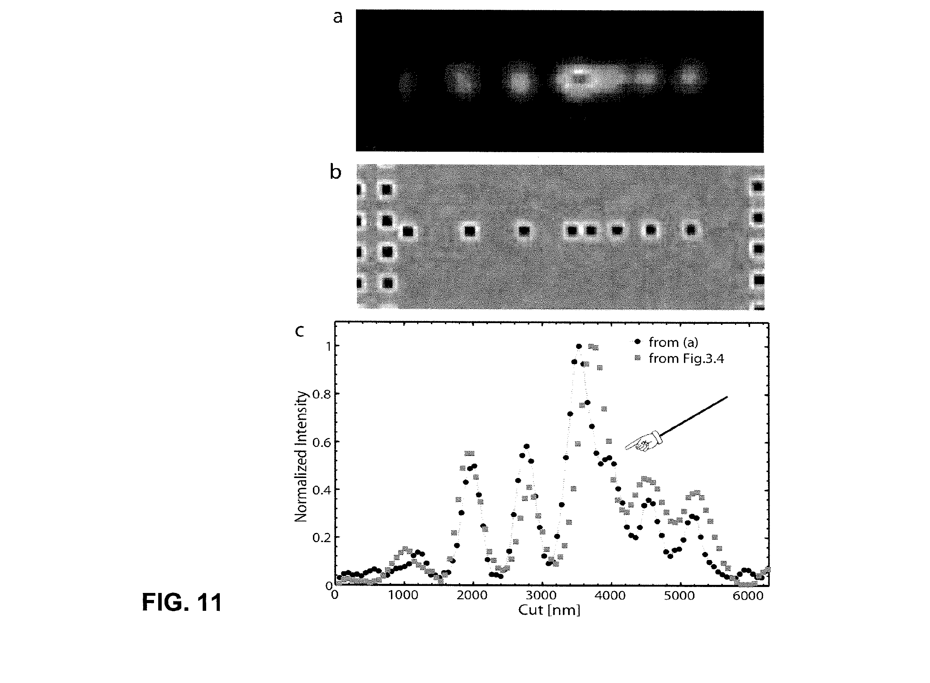

To better characterize the resolving power of the plasmonic scanning microscope, a 64 nm step scan was performed using the line of scatterers **(Fig. 7A).** Results regarding this structure are shown in **Fig. 11A-11C. Fig. 11A** depicts an image obtained by scanning a SPP focused point over the scanning area which perfectly resembles the scattering structure in the arena. In **Fig. 11B** a SEM image of the scattering structure is shown for comparison. The plasmonic image is perfectly representative of the structure.

For quantitative comparison, one-dimensional cuts along the line of the nano-holes are plotted in **Fig. 11A.** Because the SPP wavelength ($\lambda_S$ = 590 nm) is only few percentages shorter than the vacuum wavelength ($\lambda_0$ = 633 nm), these cuts are similar. The two holes separated by 100 nm gold are unresolved with both methods, as seen by the high central peak. A separation of 200 nm is still smaller than both diffraction limits, but the shoulder right of the main peak is a concrete indication of the better resolving power of our novel microscope. Such shoulder is unresolved by the Rayleigh criterion (standard diffraction limit) but is considered resolved by the Sparrow criterion, which requires a local minimum.

To acquire the scanning microscope pictures of **Figs. 9** and **11,** SPPs were focussed at one target and only the target pixel intensity (ICCD ($x_0$, $y_0$) ) was read- out (hence for every CCD picture only one pixel was used) . Here we will acquire the image of the line arena with a different intensity read out. When focusing at $r_0 = (x_0, y_0)$ with the sources along the x- axis, the maximum read- out intensity $I_S$ may be written as:

$$I_S(x_0, y_0) \equiv \max \left\{ I_{CCD}(x, y) \right\} \Big|_{y=y_0}.$$

The above expression indicates that, instead of the target pixel, the maxima along the focal line (y = $y_0$) are read out.

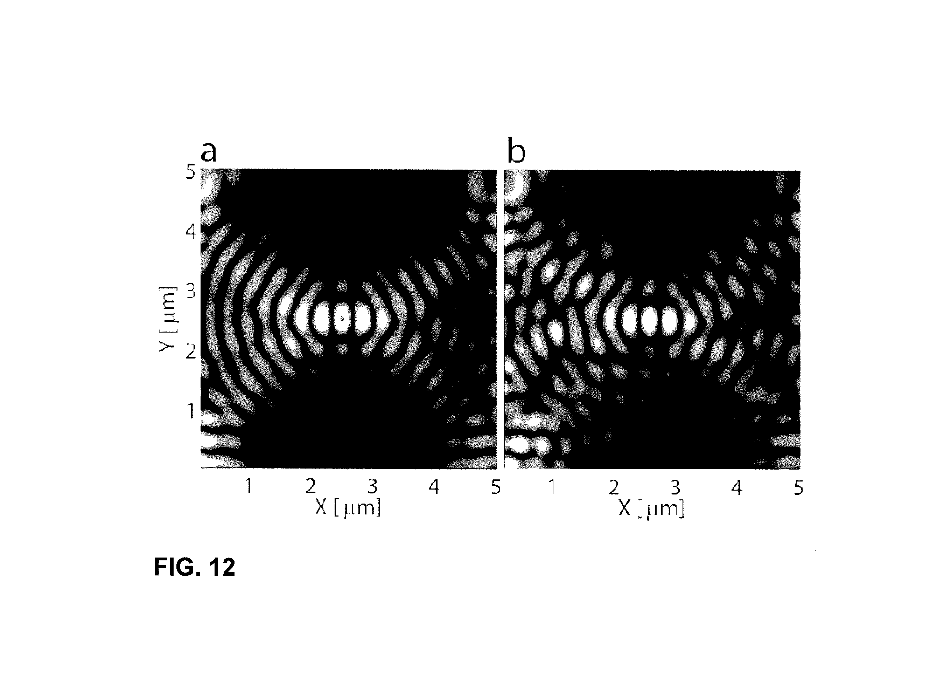

In **Fig. 12A,** the theoretical intensity distribution in the arena is calculated when focusing SPPs at different target locations. The distribution is calculated using the same parameters as for the experiment: same number and location of the sources. Each source emits spherical waves, but the phases of this waves are set to focus at the center of the arena. As expected, a standing pattern of circular fringes is created with $\lambda_S/2$ spacing.

The phase calculation does not include all possible effects, thus it is reasonable to assume that there are distortions to the ideal case. In **Fig. 12B** the effects of phase noise on the intensity distribution are visualized. A large amount of random noise, $\pm 10\% \cdot 2n$, to the ideal phase was added. The resulting aberrations are minimal confirming that the imaging technique is very robust to phase noise.

In summary, from the above, it follows that the scanning plasmonic microscope provides a simple and effective imaging technique based on surface plasmon polaritons and that it provides resolution beyond optical diffraction without near field probing. The scanning plasmonic microscopy technique may be implemented using metal-insulator-metal SPPs that achieve wavelengths of at least ten times shorter than the vacuum plasmon wavelength.

The method allows the use of deformable plasmon optics for 2D imaging, which in contrast to previous attempts on SPP microscopy with far field detection, provides for the first time resolution dependent on the SPP wavelength. To create the plasmonic lens, phase-structured illumination from a spatial light modulator (SLM) and deterministic (without feedback) calculation of the phases for focussing and step scanning with nanometer precision was used. By using a megapixel SLM, parallel processing of multiple SPP focci, is possible. The invention thus offers the potential to open a whole new field of scanning microscopy, surface biology, and in-vivo medical imaging wherein the technique may be easily extended with fast spatial light modulators (100 KHz or more) and short plasmon wavelength MIM nanostructured sample holders so that video rate imaging with nano-scale resolution is possible.

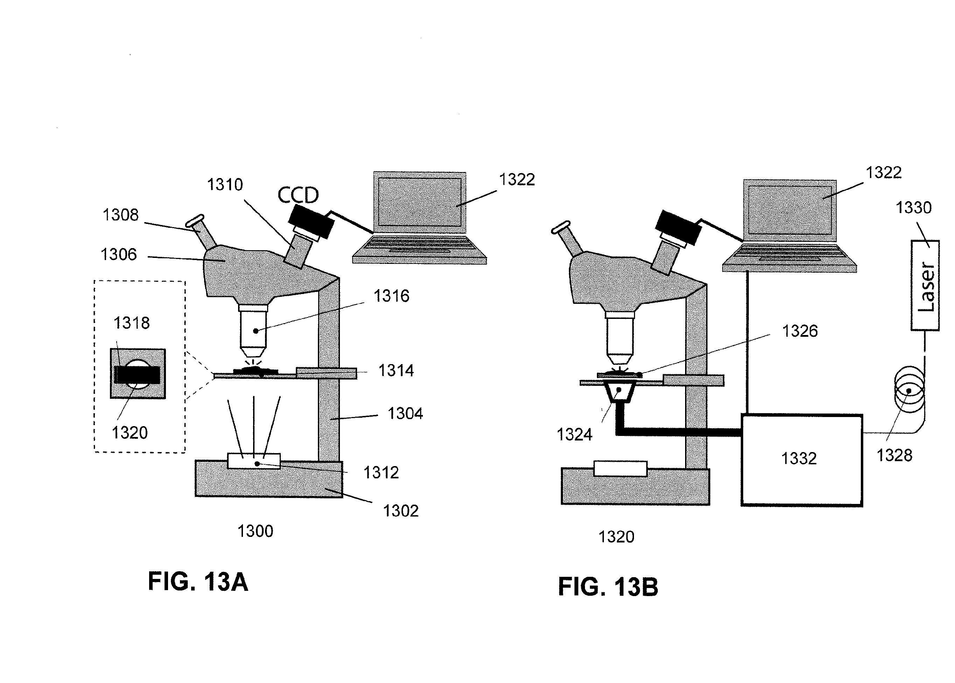

**Fig. 13A** and **13B** depict one embodiment for how the new plasmon scanning technique can be easily implemented as a simple and cheap add-on to a conventional light microscope. **Fig. 13A** depicts a conventional light microscope **1300** comprising a base **1302,** an arm **1304** holding head-piece holding one or more object lenses **1316,** an eyepiece (ocular lens) **1308** and a camera attachment tube **1310** for mounting an imaging camera (e.g. CDD) which is further connected to a computer **1322**. A light source **1312** illuminates the sample **1320** on a glass slide **1318,** which is located on a sample stage **1314,** so that magnified image of the sample can be displayed and stored.

**Fig. 13B** depicts a similar conventional microscope which now is now upgraded with a plasmon scanning microscopy kit according to an embodiment of the invention. The plasmon scanning microscope kit comprises a mounting-head **1324,** a nanostructured sample holder **1326,** a scanning controller **1322** connected via an optic fibre **1328** to a laser **1330** of a known wavelength. The scanning controller **1332** may be implemented as a microprocessor for executing a calibration process (e.g. as described with reference to **Fig. 8A-8C)** and the scanning process (e.g. as described in **Fig. 2** and Fig. **9-11).** Typically, these processes are executed on a software program. In another embodiment, all or at least a part of the functions in the scanning controller may be implemented as a software program on a computer **1322.**

The mounting-head may comprise an SLM and an optical lens system for focusing laser light onto the backside of the nanostructured sample holder in a similar was as described with reference to **Fig. 2**. The mounting-head may be shaped to be compatible with the structure of the sample stage such that it can be mounted in a simple way on a conventional microscope. Further, a nanostructured sample holder may be positioned on the sample stage and optically aligned with mounting-head and the CCD camera so that the SLM is able to focus laser light onto the nanostructured SPP-generating structures and the CCD camera is able to image scattered photons during scanning. Alignment may be achieved using e.g. alignment markers on the sample holder as depicted in **Fig. 2B** or any other type of known alignment structures which are suitable for that purpose. An optical fibre **1328** may be used to guide laser light generated by the laser source **1330** to the SLM in the mounting head. Once the mounting-head and the nanostructured sample holder are correctly mounted, a calibration program may start a calibration program for correctly determining the positions of the nanostructured SPP-generating sources. After calibration, the scanning process may be started by a scanning algorithm as described in detail with reference to **Fig. 2A-2C.**

Hence, from is directly clear from **Fig. 13A** and **13B,** the nanostructured sample holder in combination with the mounting- head, a laser source and the software for controlling the scanning process provides a very simple and cheap kit allowing to "upgrade" a conventional light microscope to a scanning plasmonic microscopy with in- plane resolutions down to 50 nm.

One embodiment of the disclosure may be implemented as a program product for use with a computer system. The program(s) of the program product define functions of the embodiments (including the methods described herein) and can be contained on a variety of computer-readable storage media. The computer-readable storage media can be a non-transitory storage medium. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. Scanning plasmonic microscope apparatus comprising:

a sample holder comprising a dielectric substrate, preferably a transparent dielectric substrate, covered with at least one metallic thin-film comprising plasmon-generating nanostructures adjacently arranged to at least one scanning area, said scanning area comprising a continuous, flat metallic surface for supporting one or more samples, preferably a biological sample;
a spatial light modulator in optical alignment with said sample holder, said spatial light modulator comprising pixels for illuminating at least part of said nanostructures with light of a predetermined phase;
a storage medium for storing target coordinates associated with target points in said at least one scanning area; and, phase information for controlling said pixels so that surface plasmon waves emitted by pixel-illuminated nanostructures are substantially in phase (focussed) in at least one of said target points in said at least one scanning area;
a scanner controller for controlling pixels in said spatial light modulator, said pixels illuminating at least part of said nanostructures on the basis of said stored phase information; and, optionally,
an image sensor configured to image photons, which are scattered away from said scanning area when surface plasmons in said target point interact with at least part of said one or more samples.

2. Apparatus according to claim 1, wherein said storage medium further comprises amplitude information for selecting pixels, which are used to control the illumination of said at least part of said nanostructures.

3. Apparatus according to claim 1, wherein said phase information is determined on the basis of the relative distance between a plasmon-generating nanostructure and a target point, preferably said phase information being determined using the formula:

$$\widetilde{\phi}(\mathbf{r_n}, \mathbf{r_0}) = -\arg\left[g(\mathbf{r_0}, \mathbf{r_n})\right] = -k_S r_{0,n} = -\frac{2\pi}{\lambda_S} r_{0,n}.$$

wherein $r_{0,n}$ is the relative distance between a source coordinate $r_n$ associated with a plasmon-generating nanostructure and a target coordinate $r_0$ associated with a target point and wherein $\lambda_S$ is the SPP wavelength.

4. Apparatus according to claims 1-3 wherein said target points form a grid of target points in said scanning area, preferably the spacing between said target points being between 10 nm and 400 nm, preferably between 20 and 200 nm.

5. Apparatus according to claim 4, wherein said scanner controller is configured to illuminating at least part of said nanostructures on the basis of said phase information such that said surface plasmon waves emitted by pixel-illuminated nanostructures are sequentially focussed in at least part of said grid of target points.

6. Apparatus according to any of claims 1-5 wherein:

said nanostructured sample holder comprises a plurality of scanning areas wherein each scanning area is associated with a plurality of plasmon-generating nanostructures;

7. Apparatus according to claim 6, wherein said target coordinates being associated with target points in two or more of said scanning areas; said phase information being used for controlling pixels so that surface plasmon waves emitted by pixel-illuminated nanostructures are substantially in phase (focussed) in said target points in said scanning areas; and, wherein said scanner controller being configured to control said spatial light modulator, such at least part of said nanostructures associated with two or more of said scanning areas are illuminated on the basis of said phase information.

8. A sample holder for use in an apparatus according to any of claims 1-7, said sample holder comprising:

a dielectric substrate, preferably a transparent dielectric substrate, covered with at least one metallic thin-film comprising plasmon-generating nanostructures adjacently arranged to one or more scanning areas, wherein a scanning area comprises a continuous, flat metallic surface for supporting one or more samples, preferably a biological sample; and, wherein said plasmon-generating nanostructures comprises one or more nano-holes, nano-protrusions, nano-wires and/or nano-trenches; and/or, wherein said metallic film comprises a metal, preferably gold, silver or aluminium, a semiconductor or graphene.

9. Sample holder according to claim 8 wherein said metallic thin-film has a thickness between 20 and 100 nm; and/or, wherein said metallic thin-film is covered with a dielectric thin-film layer, preferably said dielectric thin-film layer having of thickness between 20 and 60 nm.

10. Sample holder according to claim 9, wherein said dielectric thin-film layer is covered with a further metallic thin-film, preferably said further metallic thin-film layer having a thickness between 20 and 40 nm.

11. Use of a sample holder according to claims 8-10 in scanning plasmonic microscope apparatus, preferably in a scanning plasmonic microscope apparatus according to claims 1-7.

12. Computer-implemented method for generating phase information associated with a sample holder comprising at least one metallic thin-film comprising plasmon-generating nanostructures adjacently arranged to at least one scanning area, said method comprising:

identifying a number of plasmon-generating nanostructures on said sample holder;
determining a source coordinate $r_n$ associated with said plasmon-generating nanostructures;
determining a grid of target points, each of said target points being associated with a target point coordinate $r_0$;
calculating phase information associated with a target point in said grid of target points, said phase information allowing the control of surface plasmon waves emitted from said plasmon-generating nanostructures into said scanning area so that said surface plasmon waves are substantially in phase (focussed) in at least one of said target points; preferably said phase information being determined using the formula:

$$\widetilde{\phi}(\mathbf{r_n}, \mathbf{r_0}) = -\arg\left[g(\mathbf{r_0}, \mathbf{r_n})\right] = -k_S r_{0,n} = -\frac{2\pi}{\lambda_S} r_{0,n}.$$

wherein $r_{0,n}$ is the relative distance between a source coordinate $r_n$ associated with a plasmon-generating nanostructure and a target coordinate $r_0$ associated with a target point and wherein $\lambda_S$ is the SPP wavelength; and,
storing said phase information for at least part of said plasmon-generating nanostructures and at least part of said target points on a storage medium.

13. Computer-implemented method for controlling a scanning plasmonic microscope apparatus, preferably scanning plasmonic microscope apparatus according to any of claims 1-6, comprising a sample holder comprising at least one metallic thin-film comprising plasmon-generating nanostructures adjacently arranged to at least one scanning area, said method comprising:

determining a predetermined number of plasmon-generating nanostructures on said nanostructured sample holder;
determining a predetermined grid of target points in said scanning area, said target points being associated with target coordinates;
retrieving phase information for said plasmon generating nanostructures, said phase information being associated with a target point in said grid of target points;
focussing surface plasmon waves in said target point by controlling pixels in a spatial light modulator on the basis of said phase information, preferably each of said pixels being controlled to illuminate at least part of a predetermined plasmon-generating nanostructure with light, preferably laser light, of a predetermined phase;

generating an image sample associated with said target point; and,
repeating said focussing and said generation of image samples for at least part of said target points of said grid of target points.

**14.** A data structure for use with a scanning plasmonic microscope apparatus according to any of claims 1-6, said data structure comprising target coordinates associated with target points in at least one scanning area of a nanostructured sample holder comprising plasmon-generating nanostructures; and, phase information for controlling pixels in a spatial light modulator with is in optical alignment with said sample holder, each of said pixels being used for illuminating at least part of a predetermined plasmon-generating nanostructure with light, preferably laser light, of a predetermined phase.

**15.** A computer program product, implemented on computer-readable non-transitory storage medium, the computer program product configured for, when run on a computer, executing the method steps according to claims 13 or 14.

Phase profile

Amplitude profile

SLM

**FIG. 1**

EP 2 653 903 A1

222

220

214

212

202

201

200

216

206

204

218

205

**FIG. 2A**

226

$R_{i,j}$

$r_{k,l}$

224

(I)

228

230

232

| | $R_{1,1}$ | $R_{1,2}$ | $R_{1,3}$ | ... |
|---|---|---|---|---|
| $r_{k,1}$ | $\phi_{1,1}$ | $\phi_{1,2}$ | $\phi_{1,3}$ | ... |
| $r_{k,2}$ | $\phi_{2,1}$ | $\phi_{2,2}$ | $\phi_{2,3}$ | ... |
| $r_{k,3}$ | $\phi_{3,1}$ | $\phi_{3,2}$ | $\phi_{3,3}$ | ... |
| ... | ... | ... | ... | |

(II)

**FIG. 2B**

EP 2 653 903 A1

| Determine plasmon source and plasmon source positions associated with a scanning area 230 |
| Determine grid of target points positions in said scanning area 232 |
| Calculate phases required for a maximum SPP wave front at a target point using the relative distance between a source and a target point 234 |
| Repeat said phase calculation for all or at least a part of the target points in said grid of target points 236 |
| Store said phase information for each plasmon source and each target point in a storage medium 238 |

**FIG. 2C**

| Determine a number of plasmon sources associated with a scanning area and select a predetermined grid of target points associated with said scanning area 240 |
| Retrieved phase settings of one or more of said plasmon sources associated with a target point and load said plasmon sources with said phase settings 242 |
| Generate a focussed SPP point in said target point 244 |
| Generate an image sample associated with said target point 246 |
| Repeat said focussing and imaging for all or at least a part of said target points in said grid of target points. 248 |

**FIG. 2D**

FIG. 3

FIG. 4B

FIG. 4A

EP 2 653 903 A1

504

502

(I)

510

508

506

(II)

518

516

514

512

(III)

**FIG. 5**

**FIG. 6A**

**FIG. 6B**

FIG. 7

FIG. 8

FIG. 9

EP 2 653 903 A1

**FIG. 10**

FIG. 11

**FIG. 12**

FIG. 13B

FIG. 13A

Europäisches
Patentamt

European
Patent Office

Office européen
des brevets

## EUROPEAN SEARCH REPORT

Application Number

EP 12 16 5040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZAYATS ANATOLY ET AL: "Imaging with short-wavelength surface plasmon polaritons", APPLIED PHYSICS LETTERS, AIP, AMERICAN INSTITUTE OF PHYSICS, MELVILLE, NY, US, vol. 86, no. 15, 7 April 2005 (2005-04-07), pages 151114-1-151114-3, XP012064968, ISSN: 0003-6951, DOI: 10.1063/1.1899747 | 8,11 | INV.<br>G02B21/34<br>G02B21/00<br>G01N21/64 |
| A | * pages 151114-1, left-hand column, last paragraph - pages 151114-2, right-hand column, last paragraph *<br>* figure 3 * | 1-7,12, 13,15 | |
| X,D | BERGIN GJONAJ ET AL: "Active spatial control of plasmonic fields", NATURE PHOTONICS, vol. 5, no. 6, 22 May 2011 (2011-05-22), pages 360-363, XP55034178, ISSN: 1749-4885, DOI: 10.1038/nphoton.2011.57 | 8,11 | |
| A | * page 360, left-hand column, last paragraph - page 363, left-hand column, paragraph 1 *<br>* figures 1-3 * | 1-7,12, 13,15 | TECHNICAL FIELDS SEARCHED (IPC)<br><br>G02B<br>G01N |
| A | WO 2010/088418 A1 (UNIV CALIFORNIA [US]; LIU ZHAOWEI [US]) 5 August 2010 (2010-08-05)<br>* paragraph [0083] - paragraph [0098] *<br>* figures 5-9 * | 1-7,12, 13,15 | |

-/--

~~The present search report has been drawn up for all claims~~

| Place of search | Date of completion of the search | Examiner |
|---|---|---|
| Munich | 23 October 2012 | von Hentig, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 12 16 5040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SMITH G B ET AL: "Optical response in nanostructured thin metal films with dielectric over-layers", OPTICS COMMUNICATIONS, NORTH-HOLLAND PUBLISHING CO. AMSTERDAM, NL, vol. 242, no. 4-6, 8 December 2004 (2004-12-08), pages 383-392, XP027254691, ISSN: 0030-4018 [retrieved on 2004-11-30] * abstract * * page 387, right-hand column, paragraph 3 - page 388, right-hand column, paragraph 2 * | 8-10 | |
| X | KOWALSKI G J ET AL: "Fast temperature sensing using changes in extraordinary optical transmission through an array of subwavelength apertures", OPTICAL ENGINEERING, SOC. OF PHOTO-OPTICAL INSTRUMENTATION ENGINEERS, BELLINGHAM; THE INSTITUTION OF ELECTRICAL ENGINEERS, STEVENAGE, GB, vol. 48, no. 10, 1 October 2009 (2009-10-01), pages 104402-1, XP002672541, ISSN: 0091-3286, DOI: 10.1117/1.3250276 [retrieved on 2009-10-26] * pages 104402-4, left-hand column, last paragraph - pages 104402-5, right-hand column, paragraph 1 * * figures 2,7 * | 8,9,11 | TECHNICAL FIELDS SEARCHED (IPC) |

-/--

~~The present search report has been drawn up for all claims~~

| Place of search | Date of completion of the search | Examiner |
|---|---|---|
| Munich | 23 October 2012 | von Hentig, Roger |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ..................................................................................
& : member of the same patent family, corresponding
document

EPO FORM 1503 03.82 (P04C01)

**EUROPEAN SEARCH REPORT**

Europäisches
Patentamt
European
Patent Office
Office européen
des brevets

Application Number

EP 12 16 5040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHIU N-F ET AL: "Light control in organic electroluminescence devices by plasmonic grating coupled emission for biochemical applications", PROC. OF SPIE, PO BOX 10 BELLINGHAM WA 98227-0010 USA, vol. 7192, 17 February 2009 (2009-02-17), pages 71920I-1-71920I-8, XP040492424, DOI: 10.1117/12.809977 * Chapter 3. Experiments; pages 71920I-3 * * figure 3 * | 8-11 | |

TECHNICAL FIELDS
SEARCHED (IPC)

~~The present search report has been drawn up for all claims~~

| Place of search | Date of completion of the search | Examiner |
|---|---|---|
| Munich | 23 October 2012 | von Hentig, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-13, 15

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the
requirements of unity of invention and relates to several inventions or groups of inventions, namely:

1. claims: 1-7, 12, 13, 15

   relate to a scanning plasmonic microscope solving the
   problem of scanning an area with focused plasmon waves.
   ---

2. claims: 8-11

   relate to a sample holder solving the problem of creating
   short wavelength surface plasmon polaritons.
   ---

3. claim: 14

   relates to a data structure comprising target coordinates
   and phase information solving the problem of efficiently
   storing data.
   ---

**ANNEX TO THE EUROPEAN SEARCH REPORT
ON EUROPEAN PATENT APPLICATION NO.**

EP 12 16 5040

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2012

| Patent document cited in search report | Publication date | Patent family member(s) | Publication date |
|---|---|---|---|
| WO 2010088418 A1 | 05-08-2010 | US 2012069344 A1<br>WO 2010088418 A1 | 22-03-2012<br>05-08-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080011934 A

### Non-patent literature cited in the description

- **WATANABE.** Scanning and non-scanning surface plasmon microscopy to observe cell adhesion sites. *Biomed. Optics Express,* 01 February 2012, vol. 3 (2), 354-359
- **GJONAJ.** Active spatial control of plasmonic fields. *Nature photonics,* June 2011, vol. 5, 360-363
- **ZHAO et al.** Self-aligned inkjet printing of highly conducting gold electrodes with submicron resolution. *Journal of Applied Physics,* 2007, vol. 101, 064513